# FASCICULE DE BREVET EUROPEEN

(11) **EP 0 733 521 B1**
(45) Date de publication et mention de la délivrance du brevet: **18.07.2001**
(21) Numéro de dépôt: 96400553.2
(22) Date de dépôt: 18.03.1996
(51) Int. Cl.: B60R 25/04

(54) **Antivol électrique**
Elektrische Diebstahlsicherung
Electric anti-theft device

(30) Priorité: 21.03.1995 FR 9503392
(43) Date de publication de la demande: 25.09.1996
(73) Titulaire: VALEO SECURITE HABITACLE, 94000 Créteil (FR)
(72) Inventeur: Peyre, Jean, 78800 Houilles (FR); Humbert, Arnaud, 94000 Créteil (FR); Demouy, Olivier, 75012 Paris (FR)
(74) Mandataire: Kohn, Philippe

(56) Documents cités:
- FR-A- 2 454 503
- US-A- 1 798 917
- US-A- 3 735 833
- ATZ AUTOMOBILTECHNISCHE ZEITSCHRIFT, vol. 96, no. 5, STUTTGART DE, pages 321-323,330, XP000442154 CHRISTIAN SCHNEIDER; ULRISCH SCHREY: "Ein Fahrzeugsystem ohne mechanischen Schlüssel"

## Description

La présente invention concerne un antivol électrique, notamment pour un véhicule automobile.

Il a déjà été proposé des dispositifs permettant de déverrouiller à distance, et donc sans contact, ni électrique, ni mécanique, les ouvrants d'un objet et notamment d'un véhicule automobile.

En particulier, on a développé des techniques d'accès sans clef qui permettent d'accéder à des ressources sans avoir à sortir une clef mécanique, ou équivalente, d'autorisation de l'accès.

Un tel système est très attractif par le confort qu'il apporte à l'usager et par les possibilités de gestion des accès par des moyens informatisés qu'il permet.

Dans l'application au verrouillage et au déverrouillage d'ouvrants comme ceux d'un véhicule automobile, ou d'un antivol de sécurité comme celui d'une colonne de direction ou de l'arbre de sortie de la boîte de vitesses d'un véhicule, on a, dans cette optique, proposé des systèmes mécaniques utilisant des organes moteurs de type électrique tels qu'un moteur électrique tournant ou un électro-aimant.

Quand le système de gestion des accès reconnaît le droit d'accès et une demande d'accès, un organe de commande produit un ordre d'actionnement qui excite l'organe moteur électrique. L'antivol et/ou le verrou change d'état en passant de l'état verrouillé à l'état déverrouillé.

Une séquence analogue inverse se produit pour la sortie et/ou l'activation de l'antivol.

Selon une conception connue, décrite et représentée dans le document FR-A-2.710.599 (non publié à la date de priorité du présent brevet), il a déjà été proposé un procédé de contrôle d'un antivol de véhicule automobile, notamment avec système d'accès par commande à distance, faisant notamment appel à un commutateur de commande du démarrage et d'alimentation électrique de différents circuits électriques du véhicule et notamment d'un circuit d'alimentation des accessoires et du circuit d'allumage du moteur du véhicule. Un autre état de la technique est constitué par le document US-A-3.735.833.

Selon le procédé, dans une phase de désactivation de l'antivol, on accède au véhicule, par exemple avec une télécommande, on manoeuvre un commutateur qui reproduit la manipulation des clefs mécaniques habituelles, on détecte une position déterminée du commutateur pour produire une interrogation d'identification de la demande de déverrouillage de l'antivol, et on produit en réponse un ordre d'activation de positions successives du commutateur et un ordre de déverrouillage de l'antivol.

Dans une phase d'activation de l'antivol, on détecte une manoeuvre d'activation de l'antivol sur le commutateur, cette manoeuvre reproduisant les manipulations habituelles des clefs mécaniques, on active l'antivol, on désactive les positions successives du commutateur.

Pour la mise en oeuvre d'un tel procédé, il est fait appel à un antivol électrique du type comportant :
- un commutateur d'antivol pour l'alimentation de différents circuits électriques du véhicule ;
- un antivol motorisé comportant un moteur électrique d'entraînement d'un organe de blocage entre une position verrouillée et une position déverrouillée ;
- et une centrale d'antivol connectée aux éléments précédents pour mettre en oeuvre un procédé de contrôle de l'antivol ;
et du type dans lequel le commutateur d'antivol comporte :
- un interrupteur de clef pour détecter la simulation de l'introduction d'une clef dans le commutateur d'antivol ;
- et un interrupteur de commande à positions multiples pour commander en séquence l'alimentation desdits circuits électriques du véhicule, comportant un contact mobile de commande relié à une polarité d'une source d'alimentation, et une série de contacts fixes avec lesquels le contact mobile entre successivement en contact lors de la manoeuvre du commutateur en vue de provoquer le démarrage du véhicule, l'interrupteur de commande ne pouvant être actionné qu'en présence d'une clef.

Un antivol électrique doit conférer à l'usager la même sécurité qu'un antivol à commande classique mécanique par clef et doit notamment empêcher tout démarrage du véhicule tant que l'organe de blocage de l'antivol n'est pas dans la position déverrouillée.

De préférence, il doit aussi éviter toute possibilité d'activation de l'antivol vers sa position verrouillée tant que le véhicule n'est pas arrêté.

La présente invention a pour but de proposer un antivol électrique du type mentionné précédemment qui réponde à ces impératifs de sécurité.

Dans ce but, l'invention propose un antivol caractérisé en ce que l'un au moins des circuits électriques du véhicule est relié à une polarité de la source d'alimentation à travers l'interrupteur de commande à positions multiples et à travers un dispositif d'inhibition qui n'établit l'alimentation électrique de ce circuit que lorsque l'antivol est en position déverrouillée ;
et en ce que l'interrupteur de clef comporte un contact mobile relié à la source d'alimentation et qui est susceptible :
- de coopérer avec un premier contact fixe relié au moteur d'entraînement de l'antivol motorisé en l'absence de clef et à travers un premier interrupteur d'alimentation qui est ouvert lorsque l'antivol est en position verrouillée ;
- ou de coopérer avec un second contact fixe relié au moteur d'entraînement de l'antivol motorisé en présence de clef et à travers un deuxième interrupteur d'alimentation qui est ouvert lorsque l'antivol est en position déverrouillée ;

et en ce que la centrale d'antivol comporte une entrée de détection d'un changement de position du contact mobile de l'interrupteur de clef ;
et en ce que la centrale d'antivol comporte une entrée de détection de l'état verrouillé de l'antivol et une entrée de détection de l'état déverrouillé de l'antivol qui sont reliées à des moyens de détection de l'état de l'antivol.
Selon d'autres caractéristiques de l'invention :

- le dispositif d'inhibition est un interrupteur d'inhibition dont le contact mobile est relié audit contact fixe de l'interrupteur de commande et coopère avec un plot fixe relié audit circuit électrique lorsque l'antivol est en position déverrouillée ;
- le contact mobile de commande de l'interrupteur de commande à positions multiples du commutateur d'antivol est relié à une polarité de la source d'alimentation par un dispositif d'inhibition qui n'établit la liaison électrique que lorsque l'antivol est en position déverrouillée ;
- le dispositif d'inhibition est un interrupteur d'inhibition dont le contact mobile est relié à une polarité de la source d'alimentation et coopère avec un plot fixe relié au contact mobile de commande lorsque l'antivol est en position déverrouillée ;
- le contact mobile de l'interrupteur d'inhibition est lié en rotation au moteur de l'antivol motorisé ;
- le premier interrupteur d'alimentation est constitué par un contact mobile relié en permanence au moteur et qui est susceptible de coopérer avec un premier plot fixe relié au premier contact fixe de l'interrupteur de clef lorsque le premier interrupteur d'alimentation est fermé ;
- le second interrupteur d'alimentation est constitué par un contact mobile relié en permanence au moteur et qui est susceptible de coopérer avec un second plot fixe relié au second contact fixe de l'interrupteur de clef lorsque le second interrupteur d'alimentation est en position fermée ;
- lesdits premier et second plots fixes sont des pistes conductrices décalées et ledit contact mobile est un contact mobile commun au premier et second interrupteurs d'alimentation et qui est lié en rotation au moteur électrique ;
- l'entrée, de la centrale d'antivol, de détection d'un changement de position du contact mobile de l'interrupteur de clef est reliée à une polarité de la source d'alimentation à travers un interrupteur dont le contact mobile se déplace simultanément avec le contact mobile de l'interrupteur de clef et qui est fermé en l'absence de clef ;
- les moyens de détection de l'état d'antivol comportent :
   - un interrupteur de détection du verrouillage de l'antivol comportant un contact mobile relié à une polarité de la source d'alimentation et qui est susceptible de coopérer avec un contact fixe, relié à l'entrée de détection de l'état verrouillé de l'antivol, lorsque l'antivol est en position verrouillée ; et
   - un interrupteur de détection du déverrouillage de l'antivol comportant un contact mobile relié à une polarité de la source d'alimentation et qui est susceptible de coopérer avec un contact fixe, relié à l'entrée de détection de l'état déverrouillé de l'antivol, lorsque l'antivol est en position déverrouillée ;
   - le contact mobile de l'interrupteur de détection du verrouillage de l'antivol est relié audit premier contact fixe de l'interrupteur de clef et le contact mobile de l'interrupteur de détection du déverrouillage de l'antivol est relié au second contact fixe de l'interrupteur de clef ;
   - le contact mobile de l'interrupteur de détection du verrouillage de l'antivol est constitué par le contact mobile du premier interrupteur d'alimentation qui est susceptible de coopérer avec un contact fixe, relié à l'entrée de détection de l'état verrouillé de l'antivol, lorsque le premier interrupteur d'alimentation est ouvert, et le contact mobile de l'interrupteur de détection du déverrouillage de l'antivol est constitué par le contact mobile du second interrupteur d'alimentation qui est susceptible de coopérer avec un contact fixe, relié à l'entrée de détection de l'état déverrouillé de l'antivol, lorsque le second interrupteur d'alimentation est ouvert ;
   - l'antivol comporte un bloc d'alimentation électrique du moteur qui reçoit, de la centrale d'antivol, des ordres de commande du verrouillage ou du déverrouillage de l'antivol, une première borne du bloc d'alimentation est reliée en permanence à une première polarité de la source d'alimentation, et la seconde borne du bloc d'alimentation est susceptible d'être reliée à la seconde polarité de la source d'alimentation à travers l'interrupteur de clef et l'un ou l'autre des premier et second interrupteurs d'alimentation ;
   - le commutateur est un commutateur rotatif.

D'autres caractéristiques et avantages de l'invention apparaîtront à la lecture de la description détaillée qui va suivre pour la compréhension de laquelle on se reportera aux dessins annexés dans lesquels :
- La figure 1 est un schéma illustrant un principe de réalisation d'un antivol selon l'état de la technique comprenant une centrale électronique d'antivol ;
- la figure 2 est un schéma qui illustre le premier mode de réalisation d'un antivol électrique selon l'invention comportant une centrale d'antivol, sur lequel l'antivol électrique est représenté à l'état verrouillé en l'absence de clef ;
- la figure 3 est un schéma similaire à celui de la figure 2 sur lequel l'antivol électrique est illustré à l'état verrouillé et en présence de clef ;
- la figure 4 est un schéma similaire à celui de la figure 3 sur lequel l'antivol électrique est illustré dans une phase de transition lorsqu'il passe de l'état verrouillé à l'état déverrouillé
- la figure 5 est un schéma similaire à celui de la figure 4 sur lequel l'antivol électrique est représenté à l'état déverrouillé ;
- la figure 6 est un schéma similaire à celui de la figure 5 sur lequel l'antivol électrique est illustré à l'état déverrouillé après retrait de la clef ;
- la figure 7 est un schéma similaire à celui de la figure 6 sur lequel l'antivol électrique est illustré dans une phase de transition lorsqu'il passe de l'état déverrouillé à l'état verrouillé
- la figure 8 est un schéma similaire à celui de la figure 2 qui illustre une variante de réalisation des moyens de détection de l'état de l'antivol ;
- les figures 9 à 14 sont des schémas similaires à ceux des figures 2 à 7 qui illustrent un second mode de réalisation d'un antivol électrique conforme aux enseignements de l'invention.

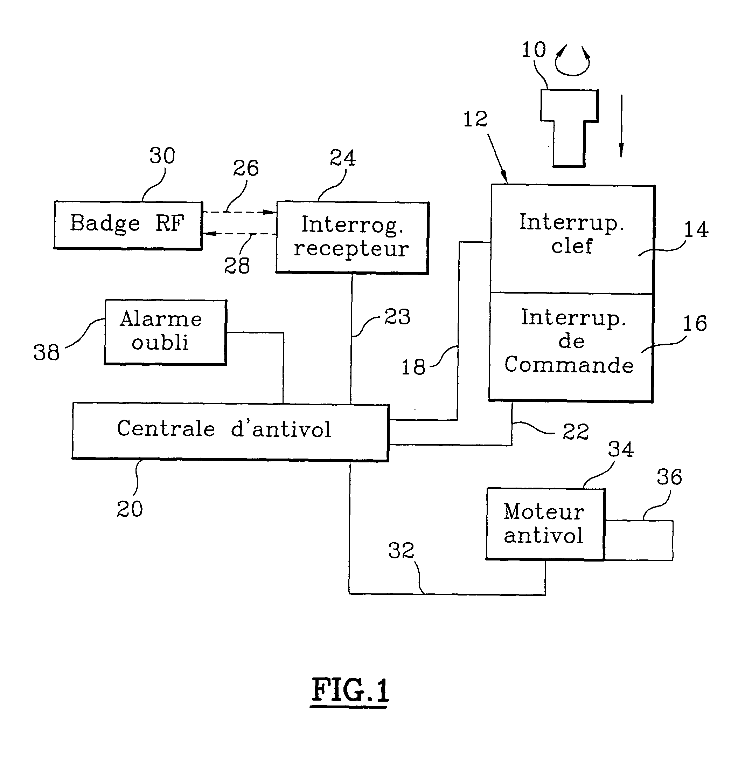

L'antivol électrique schématisé à la figure 1 comporte, conformément aux enseignements de l'état de la technique, une clef 10, ou une fausse clef, qui est destinée à venir s'introduire dans le canon, ou dans un faux canon, d'un commutateur d'antivol 12.

Le commutateur 12 est prévu pour équiper le tableau de bord du véhicule et sa conception est du type sensiblement proche de celle du commutateur de démarrage du véhicule selon l'état de la technique.

L'utilisateur manoeuvre la clef de contact 10, ou un anneau d'allumage simulant une telle manoeuvre. La clef de contact 10 est en fait une fausse clef en ce qu'elle n'agit pas nécessairement sur une serrure mécanique, bien qu'une telle clef réelle apporte un degré supplémentaire de sécurité en ajoutant un moyen de verrouillage ou de déverrouillage supplémentaire en chaîne avec la conception générale d'un antivol électrique.

Le commutateur d'antivol 12 comporte un interrupteur de clef 14 qui est destiné à détecter l'absence de la clef 10 ou la présence en position introduite de cette dernière.

Le commutateur 12 comporte également un interrupteur de commande à positions multiples 16 pour la commande du démarrage du moteur du véhicule et pour la commande de l'alimentation de différents circuits électriques du véhicule, et notamment du circuit d'allumage du moteur à combustion.

L'interrupteur de clef 14 est relié par une ligne 18 à une entrée d'une centrale d'antivol 20 tandis que l'interrupteur de commande 16 est relié à une ligne 22 par une autre entrée de la centrale d'antivol 20.

La centrale d'antivol comporte un circuit d'analyse qui est notamment capable de lire les positions qu'occupent les interrupteurs 14 et 16 du commutateur 12.

La centrale d'antivol comporte par exemple un microcontrôleur tel qu'un circuit INTEL 8051. Ce circuit contient un programme de lectures des ports d'entrée pour informer la centrale d'antivol des positions des différents interrupteurs du commutateur 12 comme cela sera expliqué par la suite.

Selon une conception connue, et par une autre entrée et une ligne 23, la centrale d'antivol 20 peut échanger des signaux avec une station d'interrogation et de réception 24 qui échange, par des lignes 26 et 28 des signaux avec par exemple un badge 30 d'accès sans clef au véhicule.

En fonction des échanges avec la centrale d'antivol 20, celle-ci produit sur une liaison 32 un signal de commande de la mise en marche d'un moteur d'antivol 34 qui agit sur un organe 36 de blocage mécanique de la colonne de direction du véhicule, ou de l'arbre de sortie de la boîte de vitesses.

Par ailleurs, si l'utilisateur oublie le badge radiofréquence 30 à l'intérieur du véhicule, ou s'il omet de manoeuvrer la clef 10 pour mettre en oeuvre une séquence de verrouillage de l'antivol alors qu'il laisse son badge 30 dans le véhicule, la centrale d'antivol 20 produit le déclenchement d'un moyen d'alarme d'oubli 38.

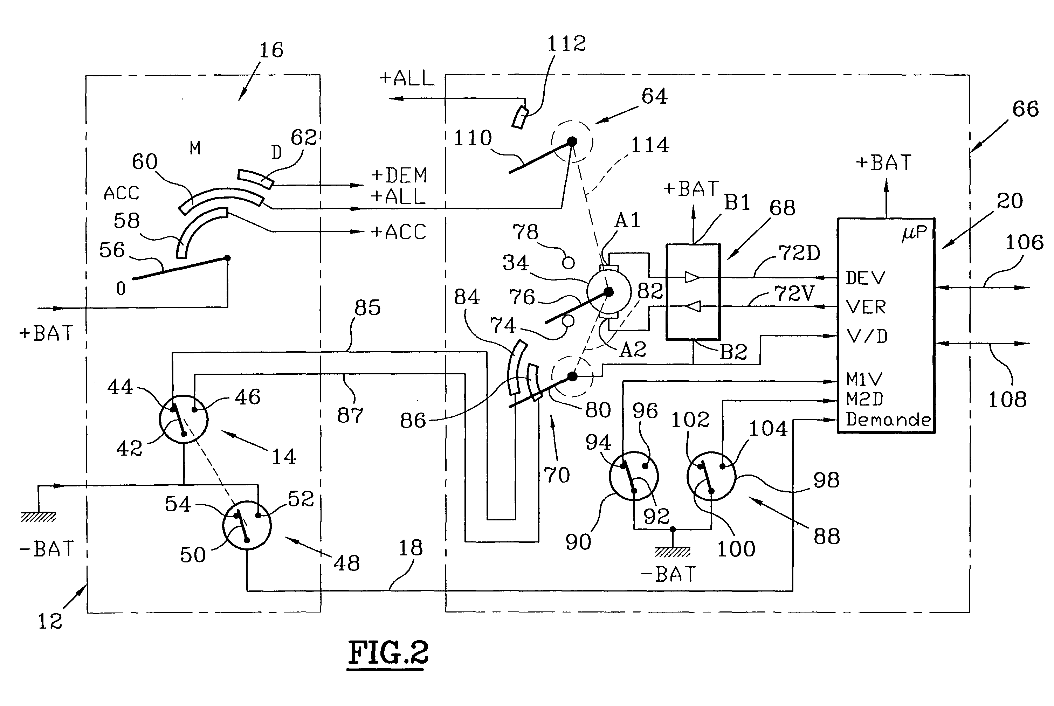

On décrira maintenant un premier mode de réalisation d'un antivol électrique selon l'invention en se reportant au schéma de la figure 2 sur laquelle des composants identiques ou similaires à ceux de la figure 1 sont désignés par les mêmes chiffres de référence.

L'interrupteur de clef 14 comporte un contact mobile basculant 42 qui est relié en permanence à la borne -BAT de la batterie du véhicule et dont l'extrémité libre coopère avec un contact fixe 44 en l'absence de clef, ou avec un contact fixe 46 lorsqu'une clef 10 est introduite dans le commutateur de commande 12 ou lorsqu'une telle introduction est simulée.

L'interrupteur de clef 14 est associé en parallèle avec un interrupteur de clef complémentaire 48 qui comporte un contact mobile 50 qui se déplace simultanément avec le contact mobile 42 de l'interrupteur de clef 14.

Le contact mobile 50 est relié en permanence, par la ligne 18, au port d'entrée "DEMANDE" de la centrale d'antivol 20 de manière que cette dernière puisse déclencher une séquence d'identification de la demande de déverrouillage de l'antivol ou de la demande de verrouillage de l'antivol.

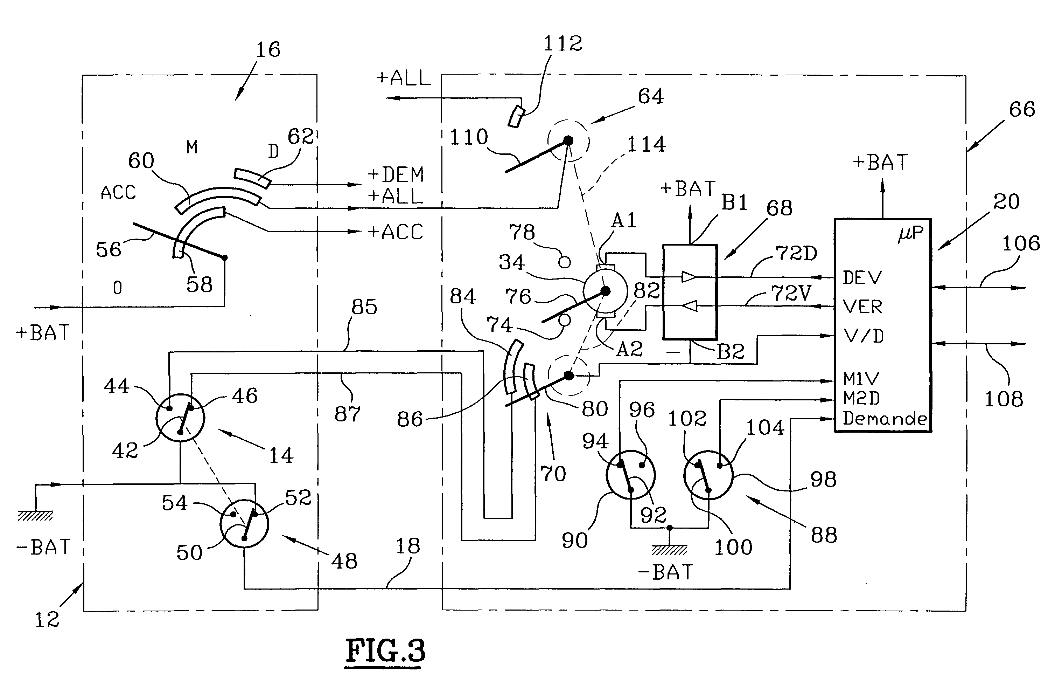

Le contact mobile 50 de l'interrupteur de clef complémentaire 48 est susceptible de coopérer avec un contact fixe 52 en présence de clef, comme cela est notamment représenté sur la figure 3, de manière à relier électriquement l'entrée "DEMANDE" de la centrale d'antivol 20 à la polarité -BAT de la batterie du véhicule.

En l'absence de clef, le contact mobile 50 coopère avec un contact fixe 54 qui est un contact neutre et le port d'entrée "DEMANDE" n'est relié à aucune polarité de la batterie du véhicule.

L'interrupteur de commande à positions multiples 16 est un interrupteur de type rotatif qui comporte un contact mobile de commande 56 qui est relié en permanence à la borne +BAT de la batterie du véhicule.

Le contact mobile de commande 56 est susceptible d'occuper successivement plusieurs positions décalées angulairement les unes par rapport aux autres et qui sont repérées "0", "ACC", "M" et "D" sur les figures.

Dans ces positions successives d'arrêt, d'alimentation d'accessoires électriques du véhicule, de marche, et de démarrage du moteur du véhicule, le contact mobile rotatif de commande 56 est susceptible de coopérer avec une ou plusieurs pistes conductrices agencées en arc de cercle constituant les contacts fixes de l'interrupteur 16.

Lorsque le contact mobile 56 est dans la position ACC, il coopère avec une piste fixe 58 qui est reliée électriquement au circuit d'alimentation +ACC des accessoires du véhicule.

Lorsque le contact mobile de commande 56 est dans la position M, il est simultanément en contact avec la piste 58 et avec une piste conductrice 60 qui est reliée au circuit d'allumage +ALL du moteur du véhicule avec interposition d'un dispositif d'inhibition 64.

Lorsque le contact mobile de commande 56 est dans la position "D", il est simultanément en contact avec la piste 60 ainsi qu'avec une piste conductrice 62 qui est reliée au circuit +DEM d'alimentation électrique du démarreur du moteur à combustion du véhicule.

On décrira maintenant plus en détail le module de blocage 66 entouré par une ligne en trait pointillé à la partie droite de la figure 2.

Le moteur 34 de l'antivol motorisé est un moteur électrique dont les bornes opposées A1 et A2 sont reliées à un bloc 68 d'alimentation électrique du moteur 34.

Une première borne B1 du bloc d'alimentation est reliée en permanence à la borne +BAT de la batterie du véhicule tandis que sa seconde borne B2 est reliée en permanence à une entrée V/D de la centrale d'antivol 20 qui est une entrée de détection de changement d'état de cette seconde borne B2.

Comme cela sera expliqué par la suite, la seconde borne B2 du bloc d'alimentation 68 est également reliée à la borne - BAT de la batterie du véhicule par l'intermédiaire de l'interrupteur de clef 14 et d'interrupteurs d'alimentation 70.

Le bloc 68 d'alimentation reçoit des ordres de commande de l'alimentation du moteur 34, en vue de provoquer son déverrouillage ou son verrouillage par des lignes 72D et 72V reliées à des ports de sortie DEV et VER de la centrale d'antivol 20.

En fonction de l'alimentation du bloc 68 et des ordres délivrés par la centrale d'antivol 20, le moteur 34 est susceptible de tourner dans l'un ou l'autre sens entre une position de verrouillage de l'antivol qui est déterminée par une butée mécanique de verrouillage 74 avec laquelle est susceptible de coopérer un organe mécanique de butée 76 lié en rotation à l'arbre de sortie du moteur 34, et une position angulaire de déverrouillage de l'antivol déterminée par une butée mécanique de déverrouillage 78.

On décrira maintenant les deux interrupteurs d'alimentation de la seconde borne B2 du bloc d'alimentation 68.

Ces interrupteurs sont constitués par un contact mobile rotatif commun 80 qui est lié en rotation à l'arbre de sortie du moteur 34, par une liaison mécanique illustrée par la ligne en trait pointillé 82.

Pour constituer le premier interrupteur d'alimentation au sens de l'invention, le contact mobile rotatif 80 est susceptible de coopérer ou non avec un premier contact fixe 84 réalisé sous la forme d'une piste conductrice qui est reliée au premier contact fixe 44 de l'interrupteur de clef 14 par une ligne 85.

Le premier interrupteur d'alimentation 80, 84 est ouvert lorsque l'antivol est en position verrouillée et il est fermé pour toutes les autres positions de l'antivol.

Le second interrupteur d'alimentation de la borne B2 est constitué par le contact rotatif 80 qui est susceptible de coopérer avec un second contact fixe 86 réalisé sous la forme d'une piste conductrice reliée en permanence au second contact fixe 46 de l'interrupteur de clef 14 par une ligne 87.

Le second interrupteur d'alimentation 80, 86 n'est ouvert que lorsque l'antivol est en position déverrouillée et il est fermé pour toutes les autres positions de l'antivol.

La centrale d'antivol 20 comporte également un port d'entrée M1V de détection de l'état verrouillé de l'antivol et un port d'entrée M2D de détection de l'état déverrouillé de l'antivol.

Les ports d'entrée M1V et M2D sont reliés à des moyens 88 de détection de l'état de l'antivol.

Dans ce premier mode de réalisation, les moyens 88 de détection de l'état de l'antivol comportent un interrupteur 90 de détection du verrouillage de l'antivol comportant un contact mobile 92 qui est relié en permanence à la borne -BAT de la batterie du véhicule et qui, lorsque l'antivol est en position verrouillée, coopère avec un contact fixe 94 qui est relié en permanence à l'entrée M1V de la centrale d'antivol 20.

Lorsque l'antivol n'est pas en position verrouillée, le contact mobile 92 de l'interrupteur 90 de détection du verrouillage de l'antivol coopère avec un contact fixe neutre 96.

Les moyens 88 de détection de l'état de l'antivol comportent également un interrupteur 98 de détection du déverrouillage de l'antivol qui comporte un contact mobile 100 qui est relié en permanence à la borne -BAT de la batterie du véhicule et qui coopère avec un contact fixe neutre 102 lorsque l'antivol n'est pas en position déverrouillée et qui coopère avec un contact fixe 104 qui est relié en permanence à l'entrée M2D de la centrale d'antivol 20, lorsque l'antivol est en position déverrouillée.

Enfin, la centrale d'antivol est reliée par une liaison codée 106 aux autres composants de l'antivol électrique et par une liaison 108 à des moyens de diagnostic.

Le dispositif d'inhibition 64 est, dans ce premier mode de réalisation, constitué par un interrupteur rotatif qui comporte un contact mobile rotatif d'inhibition 110 qui est relié en permanence à la piste conductrice 60 de l'interrupteur de commande à positions multiples 16 et qui, uniquement en position déverrouillée de l'antivol, est susceptible de coopérer avec un plot fixe 112 relié au circuit électrique +ALL d'alimentation du circuit d'allumage du moteur du véhicule.

A cet effet, le contact mobile rotatif d'inhibition 110 est relié à l'arbre de sortie du moteur 34 par une liaison mécanique représentée par la ligne en trait pointillé 114 de la figure 2.

On décrira maintenant le fonctionnement de l'antivol électrique illustré aux figures 2 à 7.

Dans la position verrouillée illustrée sur la figure 2, et en l'absence de clef, le moteur 34 est en contact avec la butée mécanique de verrouillage 74, le contact mobile 42 de l'interrupteur de clef 14 est en contact avec le contact fixe 44 et le contact mobile de commande 56 est dans sa position d'arrêt "O".

Le premier interrupteur d'alimentation 80, 84 est ouvert tandis que le second interrupteur d'alimentation 80, 86 est fermé.

En conséquence, la seconde borne B2 du bloc 68 d'alimentation du moteur électrique 34 n'est pas reliée à la borne -BAT de la batterie du véhicule.

Lorsque le conducteur introduit la clef 10 dans le commutateur 12, ou lorsqu'il simule une telle introduction, il provoque d'abord le changement d'état de l'interrupteur de clef 14 qui passe de la position illustrée sur la figure 2 à la position illustrée sur la figure 3.

Dans cette nouvelle position, le contact mobile 42 est en contact avec le contact 46 et il établit ainsi une liaison électrique entre la seconde borne B2 du bloc d'alimentation 68 et la borne -BAT de la batterie du véhicule par la ligne 87 et par le second interrupteur d'alimentation 80, 86 qui est fermé.

Simultanément avec le changement de position de l'interrupteur de clef 14, l'interrupteur complémentaire 48 a changé de position et son contact mobile 50 a établi la liaison électrique entre le port d'entrée DEMANDE de la centrale d'antivol 20 et la borne -BAT de la batterie du véhicule.

En conséquence, ce port d'entrée a reçu un ordre qui est analysé par la centrale d'antivol 20 comme un ordre de commande du déverrouillage de l'antivol.

Après avoir analysé cet ordre, la centrale d'antivol 20 transmet au bloc d'alimentation 68, par la ligne 72D, un ordre de commande du début du déverrouillage qui provoque la mise en rotation, dans le sens horaire en considérant la figure 3, du moteur 34.

L'action du conducteur sur l'interrupteur de commande à positions multiples 16, quelle que soit la position qu'il choisit pour cet interrupteur, ne peut pas provoquer le démarrage du moteur, avant que l'antivol soit en position déverrouillée, car le circuit d'allumage du moteur du véhicule n'est pas alimenté, l'interrupteur d'inhibition 64 étant ouvert.

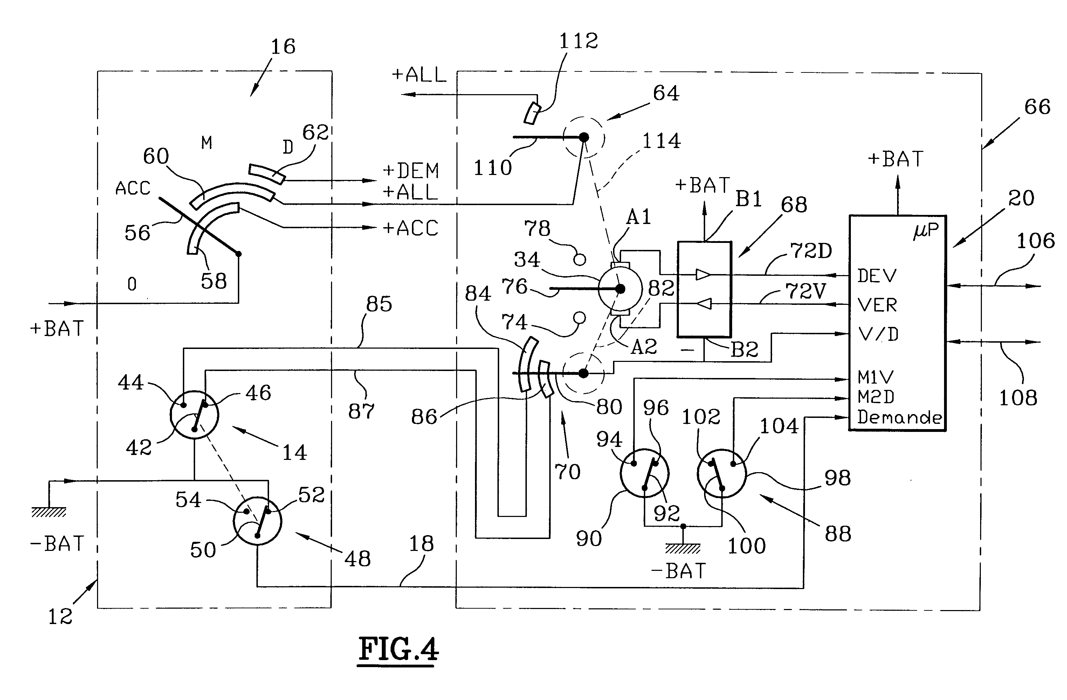

Dans la position de transition, illustrée sur la figure 4, entre l'état verrouillé et l'état déverrouillé de l'antivol, on constate que les deux interrupteurs d'alimentation 80, 84 et 80, 86 sont fermés et que l'interrupteur 90 de détection du verrouillage de l'antivol a changé de position en transmettant un signal correspondant au port d'entrée M1V de la centrale d'antivol 20.

L'interrupteur d'inhibition 64 est toujours ouvert et il n'est pas possible de provoquer le démarrage du moteur du véhicule.

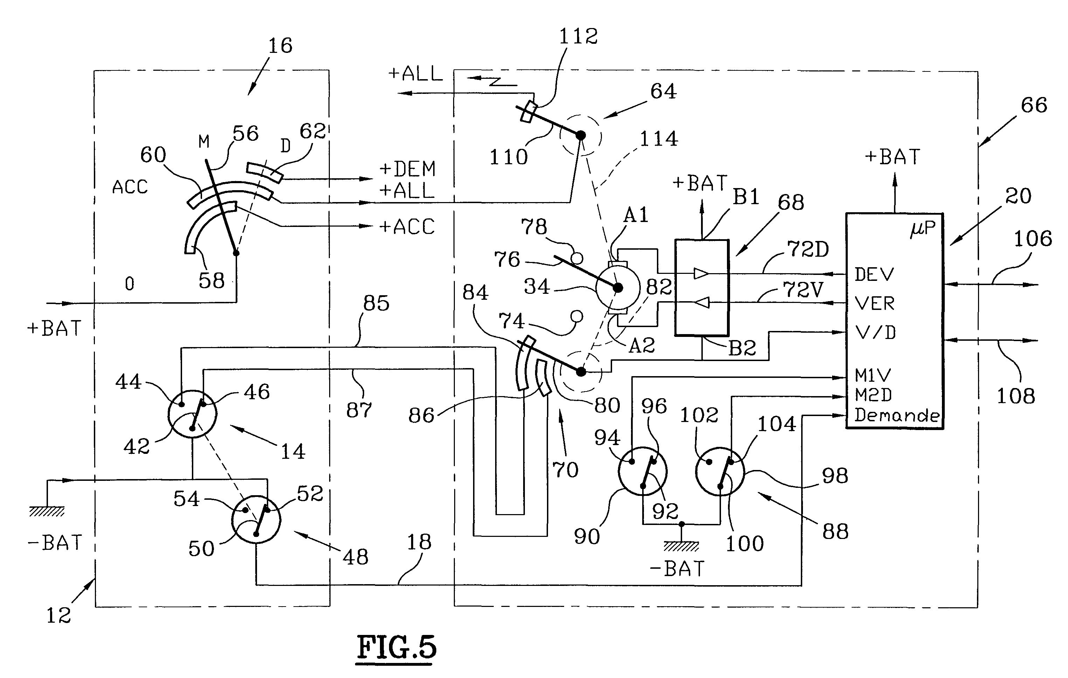

La rotation du moteur 34 se poursuit jusqu'à la position de déverrouillage de l'antivol qui est illustré sur la figure 5.

Lorsque cette position est atteinte, le second interrupteur d'alimentation 80, 86 s'ouvre et la seconde borne B2 du bloc d'alimentation 68 n'est plus reliée à la borne -BAT de la batterie du véhicule, provoquant ainsi l'arrêt du moteur 34 en position déverrouillée de l'antivol.

Lorsque cette position déverrouillée est atteinte, l'interrupteur 98 de détection du déverrouillage de l'antivol change de position et il transmet un signal correspondant au port d'entrée M2D de la centrale d'antivol qui est relié à la borne -BAT de la batterie du véhicule.

Dans cette position déverrouillée, l'interrupteur d'inhibition 64 est fermé et le circuit d'allumage du moteur du véhicule est alimenté car il est relié à la borne +BAT de la batterie par le contact mobile de commande 56 lorsque celui-ci est en regard de la piste conductrice 60.

Le conducteur peut donc alors provoquer le démarrage du moteur et continuer l'utilisation de celui-ci.

Lorsque le conducteur arrête son véhicule, il arrête le moteur et provoque le verrouillage de l'antivol en retirant la clef.

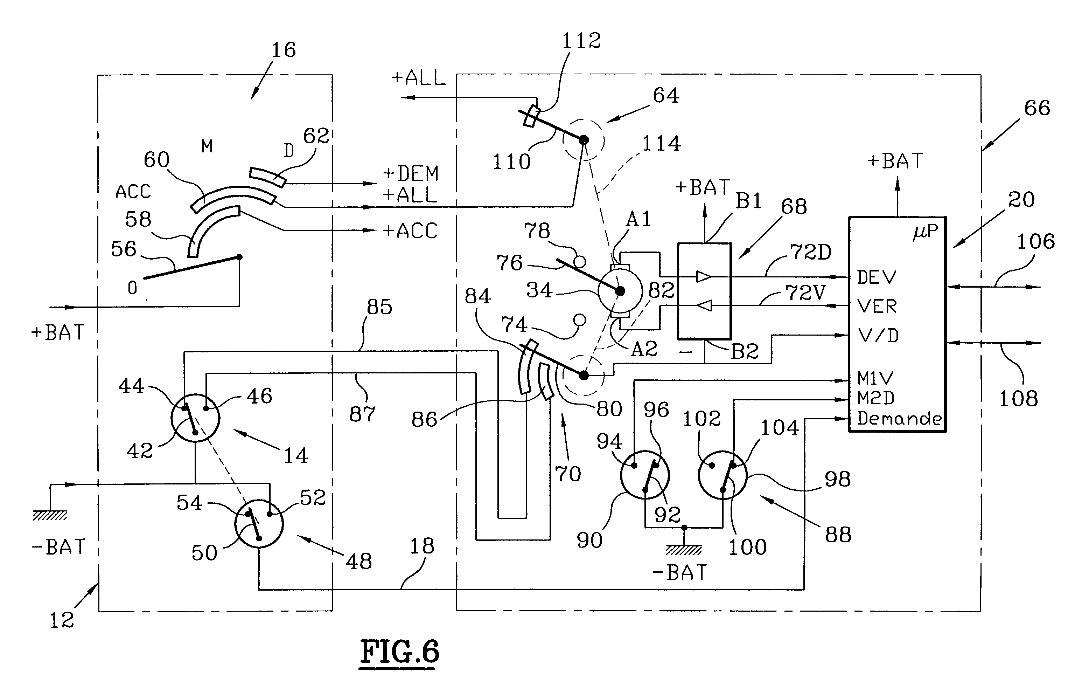

En effet, lorsqu'il retire la clef, et comme cela est illustré sur la figure 6, il provoque un changement d'état simultané de l'interrupteur de clef 14 et de l'interrupteur complémentaire 48.

Le changement de position du contact mobile 50 de l'interrupteur complémentaire 48 provoque à nouveau un changement d'état à l'entrée DEMANDE de la centrale d'antivol qui analyse de changement d'état comme une demande du verrouillage de l'antivol et la centrale d'antivol 20 transmet alors un ordre de commande correspondant de verrouillage par la ligne 72V au bloc d'alimentation 68.

La seconde borne B2 du bloc d'alimentation 68 est reliée à la borne -BAT de la batterie du véhicule par le premier interrupteur d'alimentation 80, 84 qui est fermé, par la ligne 85 et par le contact mobile basculant 42 de l'interrupteur de clef 14.

De ce fait, l'ordre de commande du verrouillage transmis au bloc d'alimentation 68 par la ligne 72V peut être exécuté et la rotation, en sens anti-horaire en considérant la figure 6, du moteur 34 peut commencer.

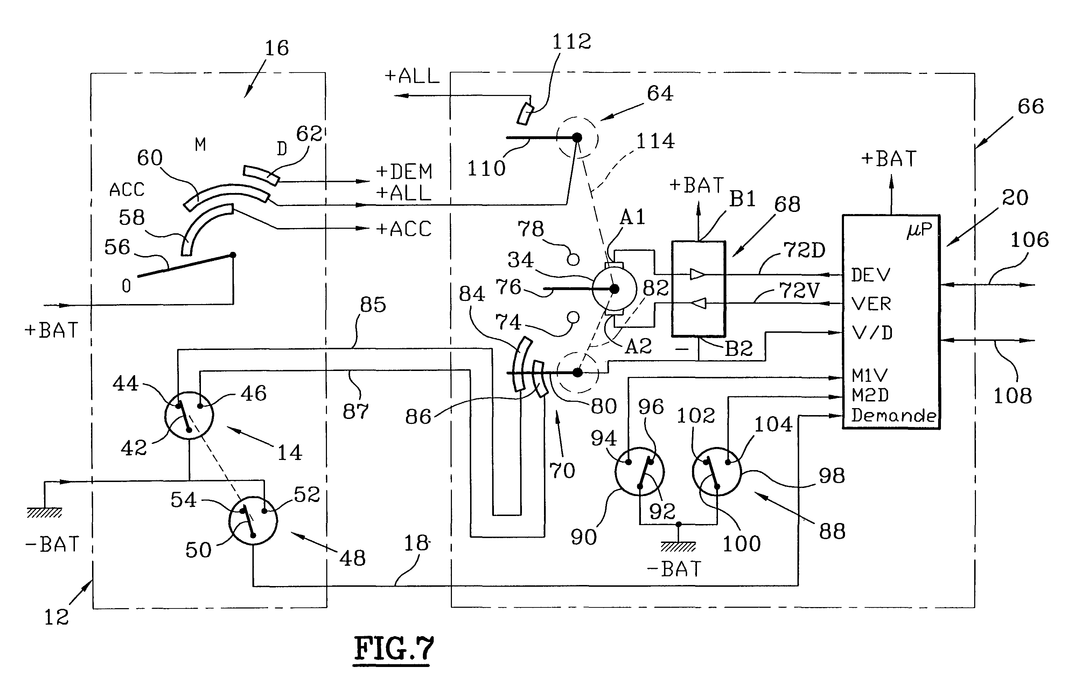

Lorsque la rotation en vue du verrouillage a commencé, et comme cela est illustré sur la figure 7, l'interrupteur d'inhibition 64 est immédiatement ouvert, et il est alors impossible au conducteur de provoquer à nouveau un démarrage du moteur du véhicule tant que l'état déverrouillé n'a pas été atteint.

Dans la position de transition illustrée sur la figure 7, les deux interrupteurs d'alimentation 80, 84 et 80, 86 sont fermés et l'interrupteur 98 de détection du déverrouillage de l'antivol a changé de position, transmettant une information correspondante à l'entrée M2D de la centrale d'antivol 20.

La rotation du moteur 34 s'effectue dans le sens anti-horaire et se poursuit jusqu'à ce qu'il vienne à nouveau occuper sa position angulaire de verrouillage illustrée sur la figure 2.

Lorsque cette position de verrouillage est à nouveau atteinte, l'interrupteur 90 de détection du verrouillage a nouveau changé de position en transmettant l'information correspondante à l'entrée M1V de la centrale d'antivol 20, toute nouvelle demande adressée à la centrale d'antivol 20 à son port d'entrée DEMANDE étant ainsi ultérieurement analysée comme un ordre de demande de déverrouillage de l'antivol.

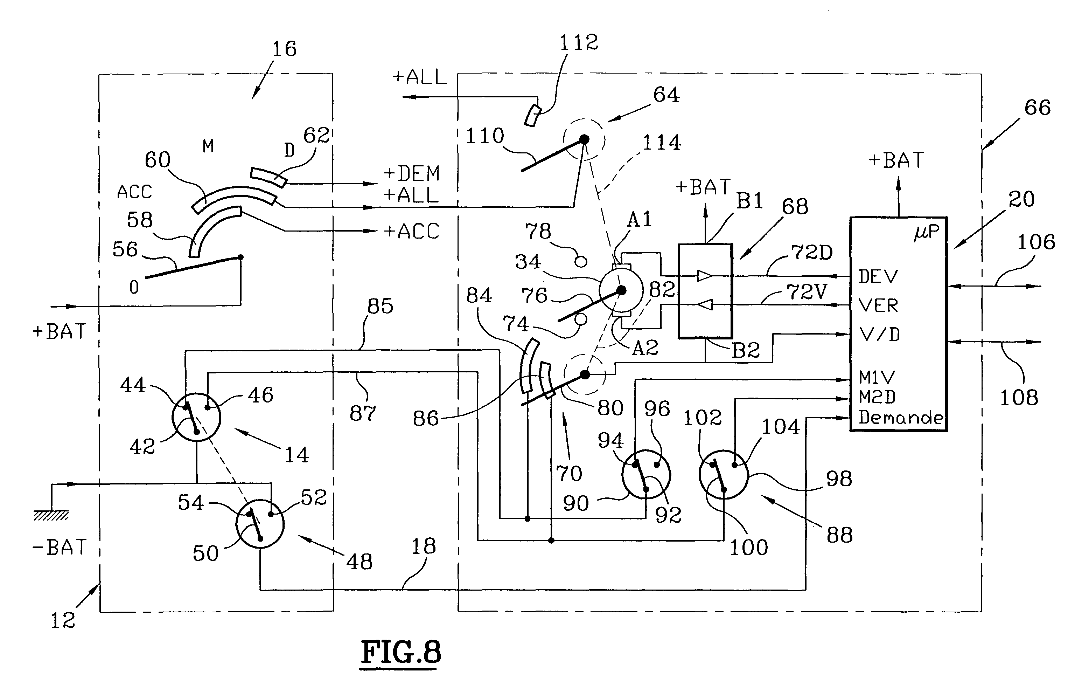

La variante de réalisation illustrée sur la figure 8 diffère du premier mode de réalisation illustré aux figures 2 à 7 seulement en ce que le contact mobile 92 de l'interrupteur 90 de détection du verrouillage de l'antivol n'est pas relié directement à la borne -BAT de la batterie, car il est relié directement au premier contact fixe 44 de l'interrupteur de clef 14.

De même, le contact mobile 100 de l'interrupteur 98 de détection du déverrouillage de l'antivol est relié directement au second contact fixe 46 de l'interrupteur de clef 14.

Le fonctionnement de la variante illustrée à la figure 8 est en tous points identique à celui qui a été décrit en référence aux figures 2 à 7.

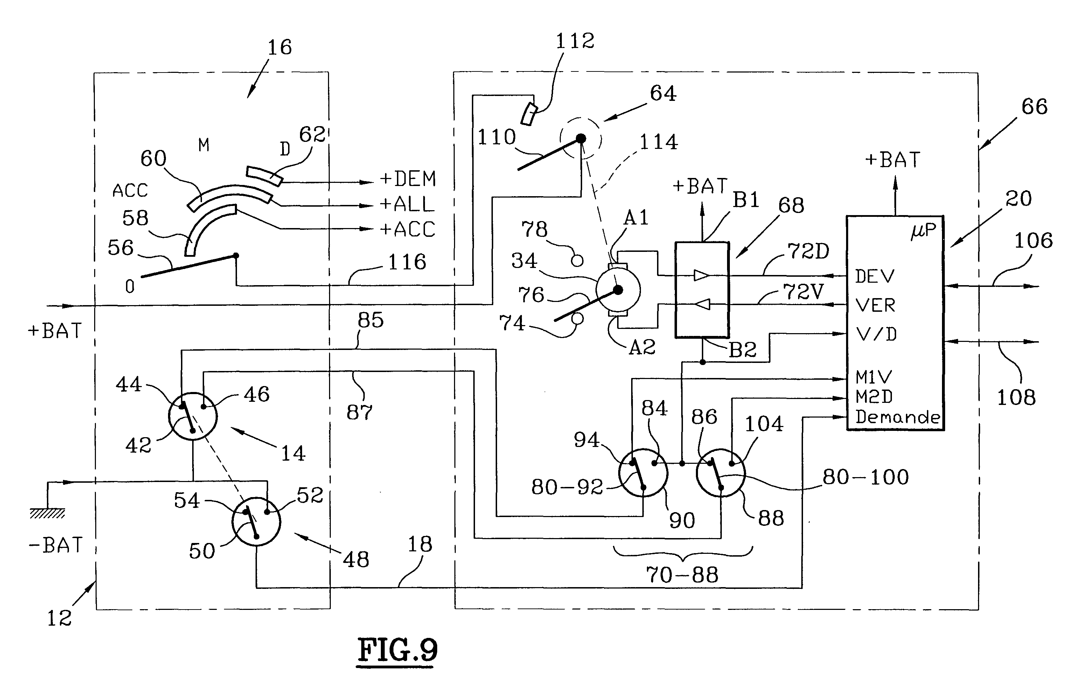

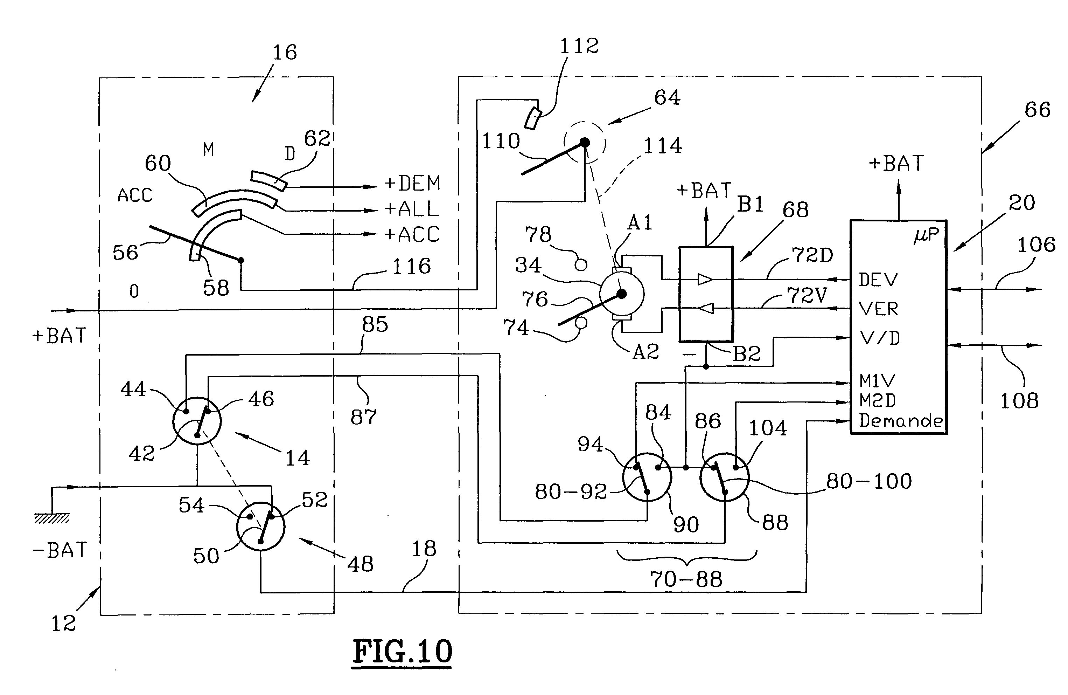

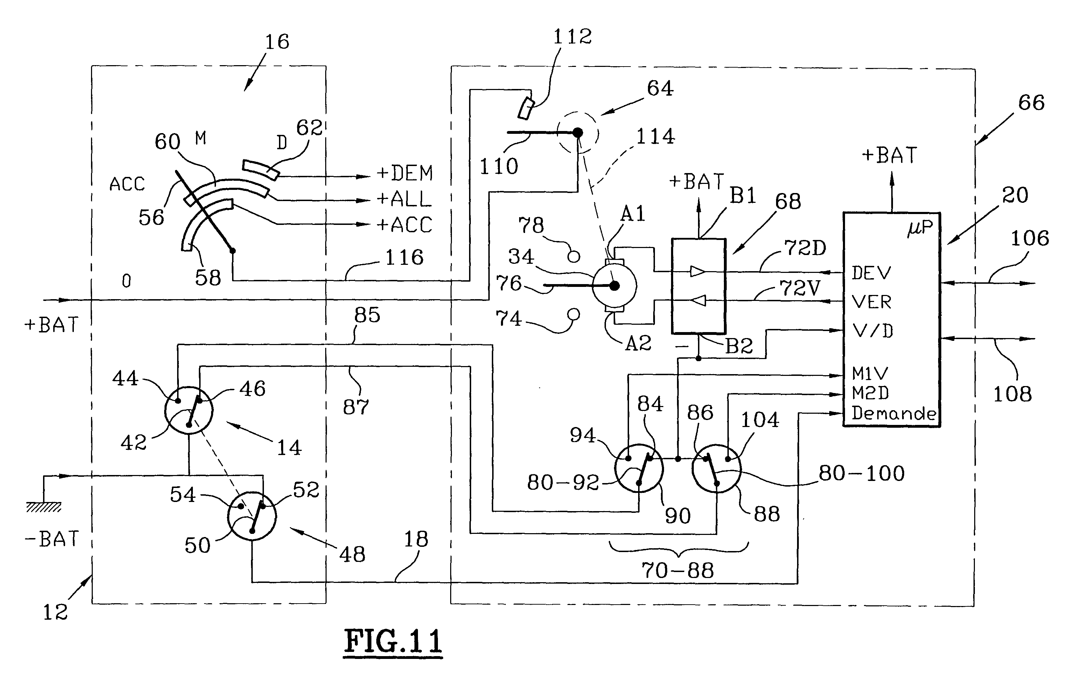

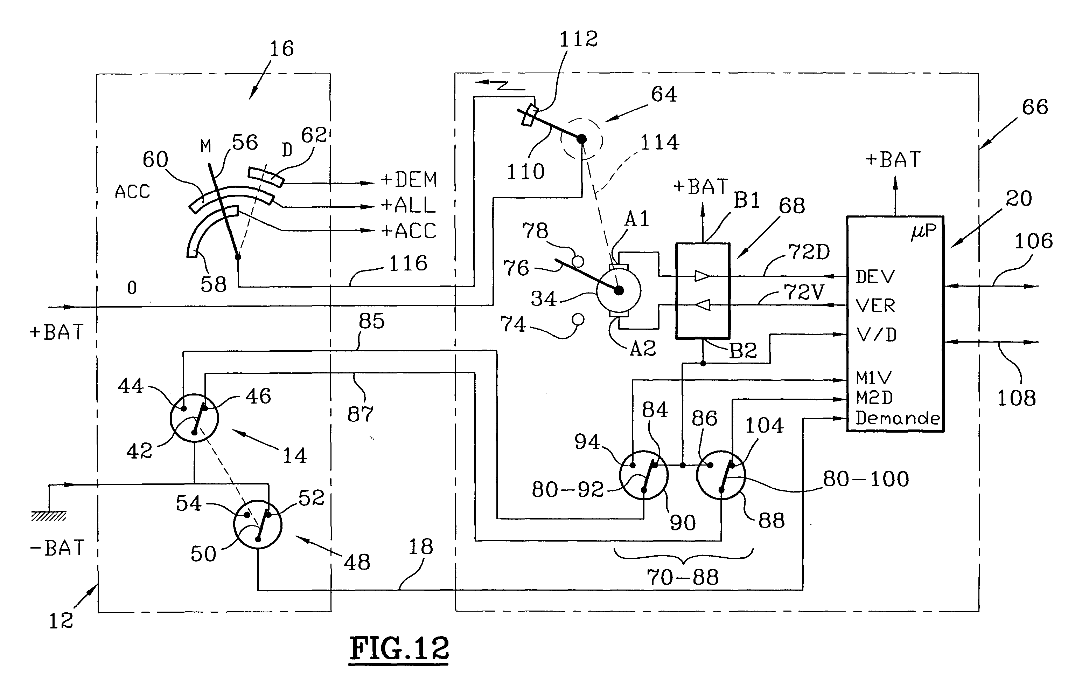

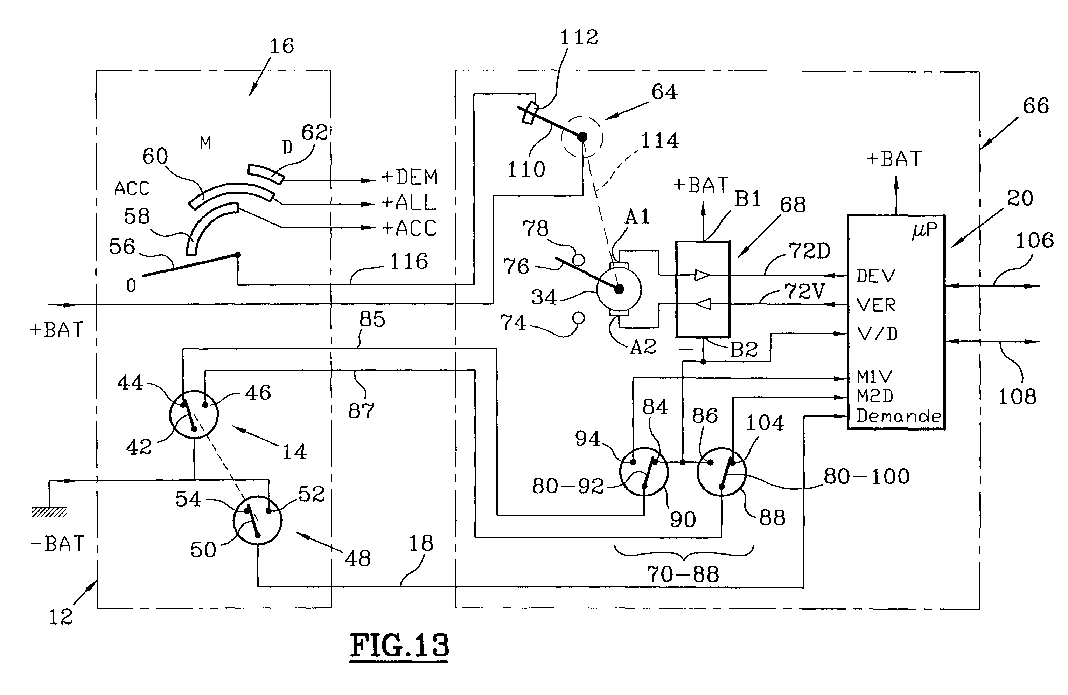

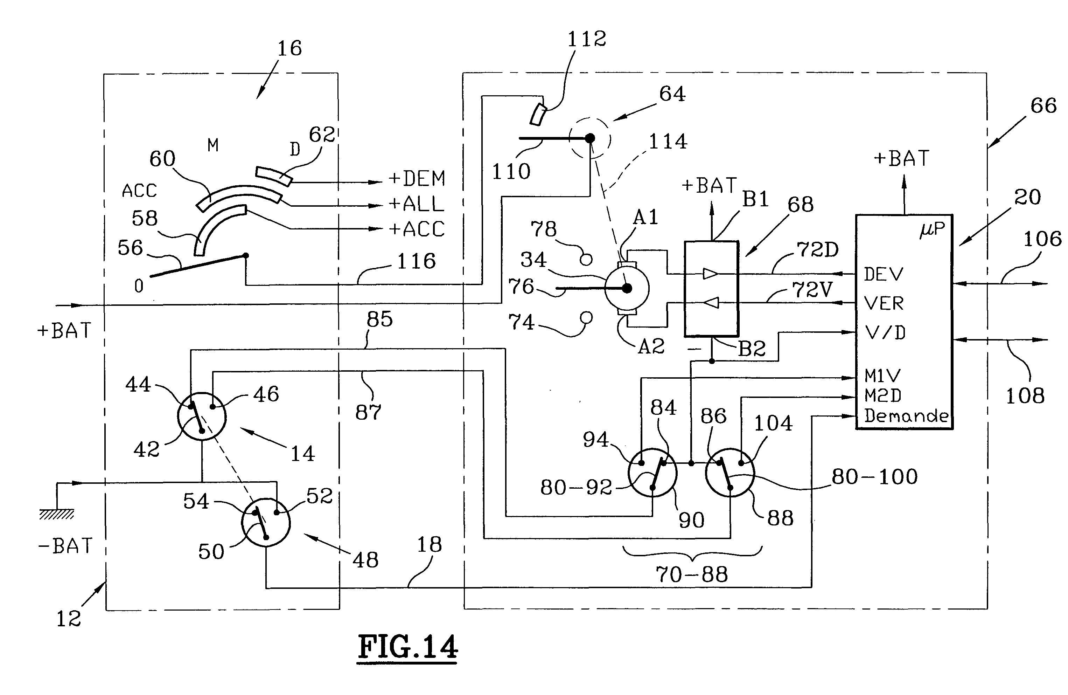

On décrira maintenant le second mode de réalisation illustré aux figures 9 à 14.

Ce second mode de réalisation diffère du premier mode de réalisation illustré aux figures 2 à 7 d'abord de par la structure des moyens d'inhibition.

En effet, dans ce second mode de réalisation, le contact mobile rotatif de commande 56 est relié par une ligne 116 au plot fixe 112 de l'interrupteur d'inhibition 64 dont le contact mobile rotatif d'inhibition 110 est relié au permanence au pôle +BAT de la batterie.

En conséquence, les circuits +DEM, +ALL et +ACC du véhicule ne peuvent être alimentés électriquement, par la coopération du contact mobile de commande 56 avec la piste correspondante 62, 60 ou 58, que lorsque l'interrupteur d'inhibition 64 est fermé, c'est-à-dire lorsque l'antivol est déverrouillé.

Le second mode de réalisation illustré aux figures 9 à 14 diffère aussi du premier mode de réalisation par la structure des interrupteurs d'alimentation et des interrupteurs de détection du verrouillage et du déverrouillage de l'antivol qui sont ici communs.

En effet, comme on peut le voir notamment sur la figure 9, le premier interrupteur d'alimentation est constitué par un contact mobile 80-92 qui est susceptible de coopérer avec un contact fixe 84 relié à la borne B2 du bloc d'alimentation 68 ou avec un contact fixe 94 relié à l'entrée M1V de la centrale d'antivol 20 pour constituer alors un interrupteur 90 de détection du verrouillage de l'antivol.

De la même manière, le second interrupteur d'alimentation est constitué par un contact mobile 80-100 qui est susceptible de coopérer avec un contact 86 relié à la borne B2 du bloc d'alimentation 68 ou avec un contact fixe 104 relié à l'entrée M2D de la centrale d'antivol 20.

Le fonctionnement du second mode de réalisation de l'antivol électrique illustré aux figures 9 à 14 est en tous points identique à celui décrit en référence aux figures 2 à 8.

## Revendications

1. Antivol électrique, notamment pour un véhicule automobile, du type comportant :
- un commutateur d'antivol (12) pour l'alimentation de différents circuits électriques du véhicule (+DEM, +ALL) ;
- un antivol motorisé comportant un moteur électrique (34) d'entraînement d'un organe de blocage (36) entre une position verrouillée et une position déverrouillée;
- et une centrale d'antivol (20) connectée aux éléments précédents pour mettre en oeuvre un procédé de contrôle de l'antivol ;
et du type dans lequel le commutateur d'antivol (12) comporte :
- un interrupteur de clef (14, 48) pour détecter la simulation de l'introduction d'une clef (10) dans le commutateur d'antivol (12);
- et un interrupteur de commande (16) à positions multiples pour commander en séquence l'alimentation desdits circuits électriques du véhicule (+ALL, +DEM), comportant un contact mobile de commande (56) relié à une polarité (+BAT) d'une source d'alimentation, et une série de contacts fixes (58, 60, 62) avec lesquels le contact mobile entre successivement en contact lors de la manoeuvre du commutateur (12) en vue de provoquer le démarrage du véhicule,
caractérisé en ce que l'un au moins des circuits électriques (+ALL, +DEM) du véhicule est relié à une polarité (+BAT) de la source d'alimentation à travers l'interrupteur de commande à positions multiples (16) et à travers un dispositif (64) d'inhibition qui n'établit l'alimentation électrique de ce circuit (+ALL) que lorsque l'antivol est en position déverrouillée ;
et en ce que l'interrupteur de clef (14) comporte un contact mobile (42) relié à la source d'alimentation (+ BAT) et qui est susceptible :
- de coopérer avec un premier contact fixe (44) relié au moteur (34) d'entraînement de l'antivol motorisé en l'absence de clef et à travers un premier interrupteur d'alimentation (80, 84) qui est ouvert lorsque l'antivol est en position verrouillée ;
- ou de coopérer avec un second contact fixe (46) relié au moteur (34) d'entraînement de l'antivol motorisé en présence de clef et à travers un deuxième interrupteur d'alimentation (80, 86) qui est ouvert lorsque l'antivol est en position déverrouillée ;
et en ce que la centrale d'antivol (20) comporte une entrée (DEMANDE) de détection d'un changement de position du contact mobile (42, 50) de l'interrupteur de clef (14, 48) ;
et en ce que la centrale d'antivol (20) comporte une entrée (M1V) de détection de l'état verrouillé de l'antivol et une entrée (M2D) de détection de l'état déverrouillé de l'antivol qui sont reliées à des moyens (88) de détection de l'état de l'antivol.

2. Antivol électrique selon la revendication 1, caractérisé en ce que le dispositif d'inhibition est un interrupteur d'inhibition (64) dont le contact mobile (110) est relié audit contact fixe (60) de l'interrupteur de commande à positions multiples (16) et coopère avec un plot fixe (112) relié audit circuit électrique (+ALL) lorsque l'antivol est en position déverrouillée.

3. Antivol électrique selon la revendication 1, caractérisé en ce que le contact mobile de commande (56) de l'interrupteur de commande à positions multiples (16) du commutateur d'antivol (12) est relié à une polarité (+BAT) de la source d'alimentation par un dispositif d'inhibition (64) qui n'établit la liaison électrique que lorsque l'antivol est en position déverrouillée.

4. Antivol électrique selon la revendication 3, caractérisé en ce que le dispositif d'inhibition est un interrupteur d'inhibition (64) dont le contact mobile (110) est relié à une polarité (+BAT) de la source d'alimentation et coopère avec un plot fixe (112) relié au contact mobile de commande (56) lorsque l'antivol est en position déverrouillée.

5. Antivol électrique selon l'une des revendications 2 ou 4, caractérisé en ce que le contact mobile (110) de l'interrupteur d'inhibition (64) est lié en rotation au moteur de l'antivol motorisé.

6. Antivol électrique selon l'une quelconque des revendications précédentes, caractérisé en ce que :
- le premier interrupteur d'alimentation est constitué par un contact mobile (80) relié en permanence au moteur (34) et qui est susceptible de coopérer avec un premier plot fixe (84) relié au premier contact fixe (44) de l'interrupteur de clef (14) lorsque le premier interrupteur d'alimentation (80, 84) est en position fermée ;
- et le second interrupteur d'alimentation est constitué par un contact mobile (80) relié en permanence au moteur (34) et qui est susceptible de coopérer avec un second plot fixe (86) relié au second contact fixe (46) de l'interrupteur de clef (14) lorsque le second interrupteur d'alimentation (80, 86) est en position fermée.

7. Antivol électrique selon la revendication 6, caractérisé en ce que lesdits premier et second plots fixes (84, 86) sont des pistes conductrices décalées, et ledit contact mobile (80) est un contact mobile (80) commun aux premier et second interrupteurs d'alimentation (80, 84, 86) et qui est lié en rotation au moteur électrique (34).

8. Antivol électrique selon l'une quelconque des revendications précédentes, caractérisé en ce que l'entrée (DEMANDE), de la centrale d'antivol (20) de détection d'un changement de position du contact mobile (42) de l'interrupteur de clef (14) est reliée à une polarité (-BAT) de la source d'alimentation à travers un interrupteur (48) dont le contact mobile (50) se déplace simultanément avec le contact mobile (42) de l'interrupteur de clef (14) et qui est fermé (48) en l'absence de clef.

9. Antivol électrique selon l'une quelconque des revendications précédentes, caractérisé en ce que les moyens (88) de détection de l'état d'antivol comportent:
- un interrupteur (90) de détection du verrouillage de l'antivol comportant un contact mobile (92) relié à une polarité (-BAT) de la source d'alimentation et qui est susceptible de coopérer avec un contact fixe (94), relié à l'entrée de détection de l'état verrouillé de l'antivol (M1V), lorsque l'antivol est en position verrouillée ;
- et un interrupteur (98) de détection du déverrouillage de l'antivol comportant un contact mobile (100) relié à une polarité (-BAT) de la source d'alimentation et qui est susceptible de coopérer avec un contact fixe (104) relié à l'entrée de détection de l'état déverrouillé de l'antivol (M2D), lorsque l'antivol est en position déverrouillée.

10. Antivol électrique selon la revendication 9, caractérisé en ce que le contact mobile (92) de l'interrupteur (90) de détection du déverrouillage de l'antivol est relié audit premier contact fixe (44) de l'interrupteur de clef (14) et en ce que le contact mobile (100) de l'interrupteur (98) de détection du déverrouillage de l'antivol est relié au second contact fixe (46) de l'interrupteur de clef (14).

11. Antivol électrique selon la revendication 9, caractérisé en ce que le contact mobile (92) de l'interrupteur (90) de détection du verrouillage de l'antivol est constitué par le contact mobile (80) du premier interrupteur d'alimentation (80, 84) qui est susceptible de coopérer avec un contact fixe (96), relié à l'entrée de détection de l'état verrouillé de l'antivol (M1V), lorsque le premier interrupteur d'alimentation (80, 84) est ouvert, et le contact mobile (100) de l'interrupteur (98) de détection du déverrouillage de l'antivol est constitué par le contact mobile (80) du second interrupteur d'alimentation (80, 86) qui est susceptible de coopérer avec un contact fixe (104), relié à l'entrée de détection de l'état déverrouillé de l'antivol (M2D), lorsque le second interrupteur d'alimentation (80, 86) est ouvert.

12. Antivol électrique selon l'une quelconque des revendications précédentes, caractérisé en ce qu'il comporte un bloc (68) d'alimentation électrique du moteur (34) qui reçoit, de la centrale d'antivol (20), des ordres de commande du verrouillage (72V) ou du déverrouillage (72D) de l'antivol, en ce qu'une première borne (B1) du bloc d'alimentation (68) est reliée en permanence à une première polarité (+BAT) de la source d'alimentation, et la seconde borne (B2) du bloc d'alimentation (68) est susceptible d'être reliée à la seconde polarité (-BAT) de la source d'alimentation à travers l'interrupteur de clef (14) et l'un ou l'autre des premier (80, 84) et second (80, 86) interrupteurs d'alimentation.

13. Antivol électrique selon l'une quelconque des revendications précédentes, caractérisé en ce que le commutateur d'antivol (12) est un commutateur rotatif.

## Patentansprüche

1. Elektrische Diebstahlsicherung, insbesondere für ein Kraftfahrzeug, welche
- einen Diebstahlschutzschalter (12) zur Versorgung der unterschiedlichen elektrischen Stromkreise des Fahrzeugs (+DEM, +ALL),
- eine motorbetätigte Diebstahlsicherung mit einem Elektromotor (34) für den Antrieb eines Sperrelements (36) zwischen einer verriegelten Stellung und einer entriegelten Stellung,
- und eine mit den vorgenannten Elementen verbundene Diebstahlschutzsteuerung (20) zur Anwendung eines Verfahrens zur Kontrolle der Diebstahlsicherung enthält;
und wobei der Diebstahlschutzschalter (12)
- einen Schlüsselschalter (14, 48) zum Erkennen der Simulation des Einführens eines Schlüssels (10) in den Diebstahlschutzschalter (12)
- und einen Mehrstellungssteuerschalter (16) für die sequentielle Steuerung der Versorgung der besagten Stromkreise des Fahrzeuges (+ALL, +DEM) umfaßt, wobei der Mehrstellungssteuerschalter einen beweglichen Steuerkontakt (56), der mit einer Polarität (+BAT) einer Stromquelle verbunden ist, und eine Reihe von feststehenden Kontakten (58, 60, 62) enthält, mit denen der bewegliche Kontakt bei einer Betätigung des Schalters (12) nacheinander in Berührung kommt, um das Fahrzeug zu starten,
- dadurch gekennzeichnet, daß wenigstens einer der Stromkreise (+ALL, +DEM) des Fahrzeuges mit einer Polarität (+BAT) der Stromquelle über den Mehrstellungssteuerschalter (16) und über eine Sperrvorrichtung (64) verbunden ist, die den Stromkreis (+ALL) nur mit elektrischem Strom versorgt, wenn die Diebstahlsicherung sich in der entriegelten Stellung befindet;
und daß der Schlüsselschalter (14) einen beweglichen Kontakt (42) umfaßt, der mit der Stromquelle (+BAT) verbunden ist und der:
- mit einem ersten feststehenden Kontakt (44) in Wirkverbindung steht, welcher in Abwesenheit des Schlüssels über einen ersten Hauptschalter (80, 84), der geöffnet ist, wenn sich die Diebstahlsicherung in der verriegelten Stellung befindet, mit dem Motor (34) verbunden ist, welcher die motorbetätigte Diebstahlsicherung antreibt;
- oder mit einem zweiten feststehenden Kontakt (46) in Wirkverbindung steht, welcher in Gegenwart des Schlüssels über einen zweiten Hauptschalter (80, 86), der geöffnet ist, wenn sich die Diebstahlsicherung in ihrer entriegelten Stellung befindet mit dem Motor (34) verbunden ist, der die motorbetätigte Diebstahlsicherung antreibt;
daß die Diebstahlschutzsteuerung (20) einen Eingang (ABFRAGE) zur Bestimmung der Änderung des beweglichen Kontaktes (42, 50) des Schlüsselschalters (14, 48) umfaßt;
und daß die Diebstahlschutzsteuerung (20) einen Eingang (M1V) zur Bestimmung des verriegelten Zustandes der Diebstahlsicherung und einen Eingang (M2D) zur Bestimmung des entriegelten Zustandes der Diebstahlsicherung umfaßt, die mit Mitteln (88) zur Bestimmung des Zustandes der Diebstahlsicherung verbunden sind.

2. Elektrische Diebstahlsicherung nach Anspruch 1, dadurch gekennzeichnet, daß es sich bei der Sperrvorrichtung um einen Sperrschalter (64) handelt, dessen beweglicher Kontakt (110) mit dem feststehenden Kontakt (60) des Mehrstellungssteuerschalters (16) verbunden ist und in Wirkverbindung mit einem Kontaktstück (112) steht, welches mit dem Stromkreis (+ALL) verbunden ist, wenn sich die Diebstahlsicherung in der entriegelten Stellung befindet.

3. Elektrische Diebstahlsicherung nach Anspruch 1, dadurch gekennzeichnet, daß der Steuerkontakt (56) des Mehrstellungssteuerschalters (16) des Diebstahlschutzschalters (12) mit der Polarität (+BAT) der Stromquelle über eine Sperrvorrichtung (64) verbunden ist, welche die elektrische Verbindung nur einschaltet, wenn sich die Diebstahlsicherung in der entriegelten Stellung befindet.

4. Elektrische Diebstahlsicherung nach Anspruch 3, dadurch gekennzeichnet, daß es sich bei der Sperrvorrichtung um einen Sperrschalter (64) handelt, dessen beweglicher Kontakt (110) mit einer Polarität (+BAT) der Stromquelle verbunden ist und in Wirkverbindung mit einem Kontaktstück (112) steht, das mit einem Steuerkontakt (56) verbunden ist, wenn die Diebstahlsicherung sich in der entriegelten Stellung befindet.

5. Elektrische Diebstahlsicherung nach Anspruch 2 oder 4, dadurch gekennzeichnet, daß der bewegliche Kontakt (110) des Sperrschalters (64) drehfest mit dem Motor der motorbetätigten Diebstahlsicherung verbunden ist.

6. Elektrische Diebstahlsicherung nach einem der vorstehenden Ansprüche,
dadurch gekennzeichnet,
- daß der erste Hauptschalter einen beweglichen Kontakt (80) umfaßt, der ständig mit dem Motor (34) verbunden ist und der mit einem ersten feststehenden Kontakt (84), welcher mit dem ersten feststehenden Kontakt (44) des Schlüsselschalters (14) verbunden ist, zusammenwirkt, wenn sich der erste Hauptschalter (80, 84) in der geschlossenen Stellung befindet, und
- daß der zweite Hauptschalter einen beweglichen Kontakt (80) umfaßt, der ständig mit dem Motor (34) verbunden ist und der mit einem zweiten feststehenden Kontakt (86), welcher mit dem zweiten feststehenden Kontakt (46) des Schlüsselschalters (14) verbunden ist, zusammenwirkt, wenn sich der zweite Hauptschalter (80, 86) in der geschlossenen Stellung befindet.

7. Elektrische Diebstahlsicherung nach Anspruch 6, dadurch gekennzeichnet, daß es sich bei den besagten ersten und zweiten feststehenden Kontakten (84, 86) um stufenweise abgesetzte Leiterbahnen und bei dem besagten beweglichen Kontakt (80) um einen gemeinsamen beweglichen Kontakt (80) des ersten und zweiten Hauptschalters (80, 84, 86) handelt, der drehfest mit dem Elektromotor (34) verbunden ist.

8. Elektrische Diebstahlsicherung nach einem der vorhergehenden Ansprüche, dadurch gekennzeichnet, daß der Eingang (ABFRAGE) der Diebstahlschutzsteuerung (20), der eine Änderung der Stellung des beweglichen Kontaktes (42) des Schlüsselschalters (14) detektiert, über einen Schalter (48) verbindbar ist mit einer Polarität (-BAT) der Stromquelle, dessen beweglicher Kontakt (50) sich gleichzeitig mit dem beweglichen Kontakt (42) des Schlüsselschalters (14) ändert und der bei Abwesenheit des Schlüssels geschlossen ist.

9. Elektrische Diebstahlsicherung nach einem der vorhergehenden Ansprüche, dadurch gekennzeichnet, daß die Mittel zur Bestimmung des Zustandes der Diebstahlsicherung
- einen Schalter (90) zur Ermittlung der Verriegelung der Diebstahlsicherung enthalten, der einen beweglichen Kontakt (92) umfaßt, welcher mit einer Polarität (-BAT) der Stromquelle verbunden ist, und der geeignet ist, mit dem feststehenden Kontakt (94) zusammenzuwirken, welcher mit dem Eingang zur Bestimmung des Verriegelungszustandes der Diebstahlsicherung (M1V) verbunden ist, wenn die Diebstahlsicherung sich in der verriegelten Stellung befindet und
- einen Schalter (98) zur Ermittlung der Entriegelung der Diebstahlsicherung enthalten, der einen beweglichen Kontakt (100) umfaßt, welcher mit einer Polarität (-BAT) der Stromquelle verbunden ist, und der geeignet ist, mit einem feststehenden Kontakt (104) zusammenzuwirken, welcher mit dem Eingang zur Bestimmung des Entriegelungszustandes der Diebstahlsicherung (M2D) verbunden ist, wenn die Diebstahlsicherung sich in ihrer entriegelten Stellung befindet.

10. Elektrische Diebstahlsicherung nach Anspruch 9, dadurch gekennzeichnet, daß der bewegliche Kontakt (92) des Schalters (90) zur Ermittlung der Verriegelung der Diebstahlsicherung mit dem ersten feststehenden Kontakt (44) des Schlüsselschalters (14) verbunden ist, und daß der bewegliche Kontakt (100) des Schalters zur Ermittlung der Entriegelung der Diebstahlsicherung mit dem zweiten feststehenden Kontakt (46) des Schlüsselschalters (14) verbunden ist.

11. Elektrische Diebstahlsicherung nach Anspruch 9, dadurch gekennzeichnet, daß der bewegliche Kontakt (92) des Schalters (90) zur Ermittlung der Verriegelung der Diebstahlsicherung durch den beweglichen Kontakt (80) des ersten Hauptschalters (80, 84), gebildet wird, der geeignet ist, mit dem feststehenden Kontakt (96) zusammenzuwirken, welcher mit dem Eingang zur Ermittlung des Verriegelungszustandes der Diebstahlsicherung (M1V) verbunden ist, wenn der erste Hauptschalter (80, 84) geöffnet ist, und daß der bewegliche Kontakt (100) des Schalters (98) zur Ermittlung der Entriegelung der Diebstahlsicherung durch den beweglichen Kontakt (80) des zweiten Hauptschalters (80, 86) gebildet wird, der geeignet ist, mit dem feststehenden Kontakt (104) zusammenzuwirken, der mit dem Eingang zur Ermittlung des Entriegelungszustandes der Diebstahlsicherung (M2D) verbunden ist, wenn der zweite Hauptschalter (80, 86) geöffnet ist.

12. Elektrische Diebstahlsicherung nach einem der vorhergehenden Ansprüche, dadurch gekennzeichnet, daß sie eine Einheit (68) zur elektrischen Stromversorgung des Motors (34) umfaßt, die von der Diebstahlschutzsteuerung (20) Steuerbefehle zur Verriegelung (72V) oder zur Entriegelung (72D) der Diebstahlsicherung erhält, daß eine erste Anschlußklemme (B1) der Stromversorgungseinheit (68) ständig mit einer ersten Polarität (+BAT) der Stromquelle verbunden ist, und daß die zweite Anschlußklemme (B2) der Stromversorgungseinheit (68) über den Schlüsselschalter (14) und dem ersten (80, 84) und dem zweiten (80, 86) Hauptschalter mit einer zweiten Polarität (-BAT) der Stromquelle verbindbar ist.

13. Elektrische Diebstahlsicherung nach einem der vorhergehenden Ansprüche, dadurch gekennzeichnet, daß es sich bei dem Diebstahlschutzschalter (12) um einen Drehschalter handelt.

## Claims

1. An anti-theft device, especially for a motor vehicle, of the type comprising:
- an anti-theft switch (12) for supplying power to various electrical circuits of the vehicle (+DEM, +ALL) ;
- a motorised anti-theft unit, including an electric motor (34) for driving a stop member (36) between a locked position and an unlocked position;
- and a central control circuit (20) connected to the foregoing elements for performing a method of controlling the anti-theft device;
and of the type in which the anti-theft switch (12) comprises:
- a key interruptor (14, 48) for detecting simulated introduction of a key (10) into the anti-theft switch (12) ;
- and a multi-position control interruptor (16) for controlling the supply of power sequentially to the said electrical circuits of the vehicle (+ALL, +DEM), and including a moving control contact (56) connected to one polarity (+BAT) of a power source, and a set of fixed contacts (58, 60, 62) with which the moving control contact enters into contact successively during operation of the switch (12), whereby to cause the engine of the vehicle to start,
characterised in that at least one of the electrical circuits (+ALL, +DEM) of the vehicle is connected to a polarity (+BAT) of the power source through the multi-position control interruptor (16) and through an inhibiting device (64) which establishes the electrical power supply of the said circuit (+ALL) only when the anti-theft unit is in its unlocked position;
and in that the key interruptor (14) has a moving contact (42) which is connected to the power source (+BAT) and which is arranged to:
- cooperate with a first fixed contact (44) connected to the drive motor (34) of the motorised anti-theft unit in the absence of a key, and through a first power interruptor (80, 84) which is open when the anti-theft unit is in its locked position;
- or to cooperate with a second fixed contact (46) connected to the drive motor (34) of the motorised anti-theft unit in the presence of a key and through a second power interruptor (80, 86) which is open when the anti-theft unit is in its unlocked position;
and in that the central control circuit (20) has an input (DEMAND) for detecting a change in position of the moving contact (42, 50) of the key interruptor (14, 48);
and in that the central control circuit (20) has an input (M1V) for detecting the locked state of the anti-theft unit and an input (M2D) for detecting the unlocked state of the anti-theft unit, which are connected to means (88) for detecting the state of the anti-theft unit.

2. An electrical anti-theft device according to Claim 1, characterised in that the inhibiting device is an inhibiting interruptor (64) having a moving contact (110) which is connected to the said fixed contact (60) of the multi-position control interruptor (16), and which co-operates with a fixed contact pad (112), connected to the said electrical circuit (+ALL) when the anti-theft unit is in its unlocked position.

3. An electrical anti-theft device according to Claim 1, characterised in that the moving control contact (56) of the multi-position control interruptor (16) of the anti-theft switch (12) is connected to a polarity (+BAT) of the power source through an inhibiting device (64) which establishes the electrical connection only when the anti-theft unit is in its unlocked position.

4. An electrical anti-theft device according to Claim 3, characterised in that the inhibiting device is an inhibiting interruptor (64), the moving contact (110) of which is connected to one polarity (+BAT) of the power source and co-operates with a fixed contact pad (112) connected to the moving control contact (56) when the anti-theft unit is in its unlocked position.

5. An electrical anti-theft device according to Claim 2 or Claim 4, characterised in that the moving contact (110) of the inhibiting interruptor (64) is coupled in rotation to the motor of the motorised anti-theft unit.

6. An electrical anti-theft device according to any one of the preceding Claims, characterised in that:
- the first power interruptor comprises a moving contact (80) which is permanently connected to the motor (34) and which is adapted to cooperate with a first fixed contact pad (84) connected to the first fixed contact (44) of the key interruptor (14) when the first power interruptor (80, 84) is in its closed position;
- and the second power interruptor comprises a moving contact (80) which is permanently connected to the motor (34) and which is adapted to cooperate with a second fixed contact pad (86) connected to the second fixed contact (46) of the key interruptor (14) when the second power interruptor (80, 86) is in its closed position.

7. An electrical anti-theft device according to Claim 6, characterised in that the said first and second fixed contact pads (84, 86) are staggered conductive tracks, and the said moving contact (80) is a moving contact (80) which is common to the first and second power interruptors (80, 84, 86) and which is coupled in rotation to the electric motor (34).

8. An electrical anti-theft device according to any one of the preceding Claims, characterised in that the input (DEMAND) of the central control circuit (20) for detecting a change in position of the moving contact (42) of the key interruptor (14) is connected to one polarity (-BAT) of the power source through an interruptor (48) having a moving contact (50) which is displaced simultaneously with the moving contact (42) of the key interruptor (14), and which is closed (48) in the absence of a key.

9. An electrical anti-theft device according to any one of the preceding Claims, characterised in that the means (88) for detecting the state of the anti-theft unit comprise:
- an interruptor (90) for detecting locking of the anti-theft unit and comprising a moving contact (92) which is connected to one polarity (-BAT) of the power source and which is adapted to cooperate with a fixed contact (94) connected to the input for detection of the locked state of the anti-theft unit (M1V), when the anti-theft unit is in its locked position;
- and an interruptor (98) for detecting unlocking of the anti-theft unit and having a moving contact (100) which is connected to one polarity (-BAT) of the power source and which is adapted to cooperate with a fixed contact (104) connected to the input for detecting the unlocked state of the anti-theft unit (M2D), when the anti-theft unit is in its unlocked position.

10. An electrical anti-theft device according to Claim 9, characterised in that the moving contact (92) of the interruptor (90) for detecting unlocking of the anti-theft unit is connected to the said first fixed contact (44) of the key interruptor (14), and in that the moving contact (100) of the interruptor (98) for detecting unlocking of the anti-theft unit is connected to the second fixed contact (46) of the key interruptor (14).

11. An electrical anti-theft device according to Claim 9, characterised in that the moving contact (92) of the interruptor (90) for detecting locking of the anti-theft unit consists of the moving contact (80) of the first power interruptor (80, 84), arranged to cooperate with a fixed contact (96) which is connected to the input for detecting the locked state of the anti-theft unit (M1V), when the first power interruptor (80, 84) is open, and the moving contact (100) of the interruptor (98) for detecting unlocking of the anti-theft unit consists of the moving contact (80) of the second power interruptor (80, 86), arranged to cooperate with a fixed contact (104) which is connected to the input for detecting the unlocked state of the anti-theft unit (M2D), when the second power interruptor (80, 86) is open.

12. An electrical anti-theft device according to any one of the preceding Claims, characterised in that it includes an electrical power pack (68) for the motor (34), which receives commands from the central control circuit (20) for locking (72V) or unlocking (72D) of the anti-theft unit, in that a first terminal (B1) of the power pack (68) is permanently connected to a first polarity (+BAT) of the power source, and the second terminal (B2) of the power pack (68) is arranged to be connected to the second polarity (-BAT) of the power source through the key interruptor (14) and either the first power interruptor (80, 84) or the second power interruptor (80, 86).

13. An electrical anti-theft device according to any one of the preceding Claims, characterised in that the anti-theft switch (12) is a rotary switch.
